# EUROPÄISCHE PATENTSCHRIFT

(11) **EP 0 854 028 B1**
(45) Veröffentlichungstag und Bekanntmachung des Hinweises auf die Patenterteilung: **10.07.2002**
(21) Anmeldenummer: 98100190.2
(22) Anmeldetag: 08.01.1998
(51) Int. Cl.: B29C 70/44

(54) **Verfahren zur Herstellung eines Hohlkörpers aus einem harzgetränkten Fasermaterial**
Method for forming hollow parts from resinous fibrous material
Procédé pour la fabrication d'un corps creux à partir d'un matériau fibreux résineux

(30) Priorität: 17.01.1997 DE 19701535
(43) Veröffentlichungstag der Anmeldung: 22.07.1998
(73) Patentinhaber: Menzolit-Fibron GmbH, 75015 Bretten (DE)
(72) Erfinder: Bieniek, Klaus, 76703 Kraichtal-Menzingen (DE); Ehnert, Gerd, 76694 Forst (DE)
(74) Vertreter: Scherzberg, Andreas, Dr.

(56) Entgegenhaltungen:
- DE-A- 2 512 152
- DE-A- 2 537 945
- DE-A- 2 746 173
- DE-A- 3 201 786
- DE-C- 3 923 415

## Beschreibung

Die Erfindung betrifft ein Verfahren zur Herstellung eines Hohlkörpers aus einem harzgetränkten Fasermaterial in einem Formwerkzeug.

Hohlkörper aus Kunststoffen werden durch Blas- oder Preßverfahren hergestellt. Blasverfahren werden zur Herstellung von dünnwandigen Hohlkörpern eingesetzt. Aufgrund ihrer relativ festen Struktur können harzgetränkte Fasermaterialien nicht mit Blasverfahren verarbeitet werden. Mit Preßverfahren sind Hohlkörper nur aufwendig herzustellen, da in dem Hohlraum des Hohlkörpers ein Formkern die von dem Werkzeug auf die Außenkontur des Hohlkörpers aufgebrachte Kraft abstützen muß. Anderenfalls würde der Hohlkörper zusammengedrückt werden. Am weitesten verbreitet unter den Preßverfahren sind Verfahren, bei denen zunächst zwei Halbschalen des Hohlkörpers mit konventioneller Preßtechnik hergestellt werden. Diese beiden Halbschalen werden dann zu einem Hohlkörper verklebt. Für dieses Verfahren sind jedoch zwei Werkzeuge sowie eine Klebevorrichtung nötig. Ein weiteres Verfahren kommt mit nur einem Werkzeug aus. In das Werkzeug werden sogenannte Kernzüge eingebaut, die in dem Innenraum des Hohlkörpers verlaufen und die Innenwand formen. Die Formgebungsmöglichkeiten für die Hohlkörper sind bei diesem Verfahren eingeschränkt. Nur einfache Geometrien sind möglich.

Aus der DE-A-27 46 173 ist eine Vorrichtung zur Herstellung eines offenen Hohlkörpers aus einem harzgetränkten Fasermaterial bekannt, bei welchem ein Kernkörper mit dem Fasermaterial umhüllt wird, der Kernkörper mit dem Fasermaterial in ein Formwerkzeug eingelegt wird, und das Formwerkzeug erhitzt ist, so dass das Harz polymerisiert.

Der Kernkörper ist im wesentlichen starr ausgebildet und wird nach dem Aushärten des Harzes entfernt.

Kompliziert geformte Hohlkörper sind mit dieser Vorrichtung nicht herzustellen, da bei diesen der Kernkörper nicht entfernt werden könnte.

Aus der DE-A-25 12 152 ist ein Verfahren zur Herstellung von Körpern aus glasfaserverstärktem Kunststoff mit einem Schaumstoffkern bekannt. Der Kern bleibt bei diesem Verfahren während des gesamten Herstellungsprozesses als Tragkörper bestehen.

Der Erfindung liegt die Aufgabe zugrunde, ein Verfahren zu schaffen, mit dem auf einfache Art und Weise auch kompliziert geformte Hohlkörper herzustellen sind.

Diese Aufgabe wird erfindungsgemäß mit den Merkmalen des Patentanspruchs 1 gelöst.

Ein Kernkörper, der ein Gas enthält, wird mit harzgetränktem Fasermaterial umhüllt. Die Steifigkeit des Kernkörpers gibt dem Fasermaterial annähernd die Kontur des zu erzeugenden Hohlkörpers. Der Kernkörper mit dem Fasermaterial wird in ein Formwerkzeug eingelegt, das dann eine Kraft auf den elastischen Kernkörper ausübt, dabei werden der Kernkörper und das darin befindliche Gas komprimiert. Das Gas verteilt aufgrund seiner elastischen Eigenschaft die Kraft gleichmäßig auf alle Flächen des Kernkörpers. Dadurch wird das Fasermaterial gleichmäßig, also auch in Ecken, an die Innenkontur des Formwerkzeuges gepresst, so dass ein vollflächiger Kontakt mit der Hohlform des Werkzeuges entsteht. Dies ermöglicht eine glatte Oberfläche und verdichtete Wandung des Hohlkörpers, da durch den Druck die vorhandenen Hohlräume zwischen Werkzeug, Fasermaterial und Kernkörper gefüllt werden. Weiterhin ermöglicht der feste Kontakt zwischen Fasermaterial und Formwerkzeug eine gute Wärmeleitung von dem erwärmten Formwerkzeug auf das Fasermaterial, so dass das an dem Fasermaterial befindliche Harz schnell polymerisiert, wodurch der Hohlkörper seine bleibende Form erhält. Das erfindungsgemäße Verfahren hat den Vorteil, dass kein präzisionsgefertigtes inneres Formwerkzeug benötigt wird, da die Kontur des Hohlkörpers sich unter dem Druck des Kernkörpers an die Hohlform des Werkzeuges anpasst und dass anstelle eines aufwendigen Press-Formwerkzeuges ein einfaches Formwerkzeug benutzt werden kann.

Erfindungsgemäß ist der Kernkörper derart beschaffen, dass er nach der Verfestigung des Harzes in sich zusammenfällt, wobei allenfalls eine dünne Schicht am Boden des Hohlkörpers verbleibt. Auf diese Weise wird ein vollkommen geschlossener Hohlkörper geschaffen, der kein produktionsbedingtes Loch aufweist. Es ist auch möglich den zusammengefallenen Kernkörper durch ein Loch aus dem Hohlkörper zu entfernen.

Vorteilhafterweise wird der von dem Formkörper ausgehende Druck durch Andrücken des Werkzeug hervorgerufen, indem das Gas in dem Formkörper verdichtet wird. Es ist aber auch möglich, den in dem Werkzeug befindlichen Formkörper von außen aufzublasen, indem eine ein Gas führende Lanze verwendet wird. Dies hat den Vorteil, dass durch zusätzliche Kräfte das Ausformen des Fasermaterials unterstützt werden kann.

In einer besonderen Ausgestaltung der Erfindung besteht der Kernkörper aus einem Schaumstoff. Dies ermöglicht eine sehr einfache und kostengünstige Herstellung des Kernkörpers. Durch die Wärme des Polymerisationsvorganges schmilzt der Schaumstoff zusammen, so daß keine weiteren Anstrengungen unternommen werden müssen, um den Kernkörper zusammenfallen zu lassen.

Der Kernkörper kann auch ein mit Gas gefüllter Ballon (Hohlkörper) sein, dessen Hülle von der Wärme aufgeschmolzen wird oder z.B. mit einer Spitze zerstochen wird.

Anhand der Zeichnungen werden Ausführungsbeispiele der Erfindung näher erläutert.

Es zeigen:
- Fig. 1: das Umhüllen eines Kernkörpers mit Fasermaterial,
- Fig. 2: das Formwerkzeug, das eine Kraft auf den eingeschlossenen Kernkörper und das eingeschlossene Fasermaterial ausübt,
- Fig. 3: das Formwerkzeug, das den Kernkörper und das Fasermaterial erhitzt,
- Fig. 4: den fertigen Hohlkörper,
- Fig. 5: eine zweite Ausführungsform des Werkzeuges mit eingesetztem Kernkörper, bei der von außen Gas in den Kernkörper gebracht wird, und
- Fig. 6: in gleicher Darstellung wie in Fig. 5 das Abbauen des erzeugten Gasdrucks.

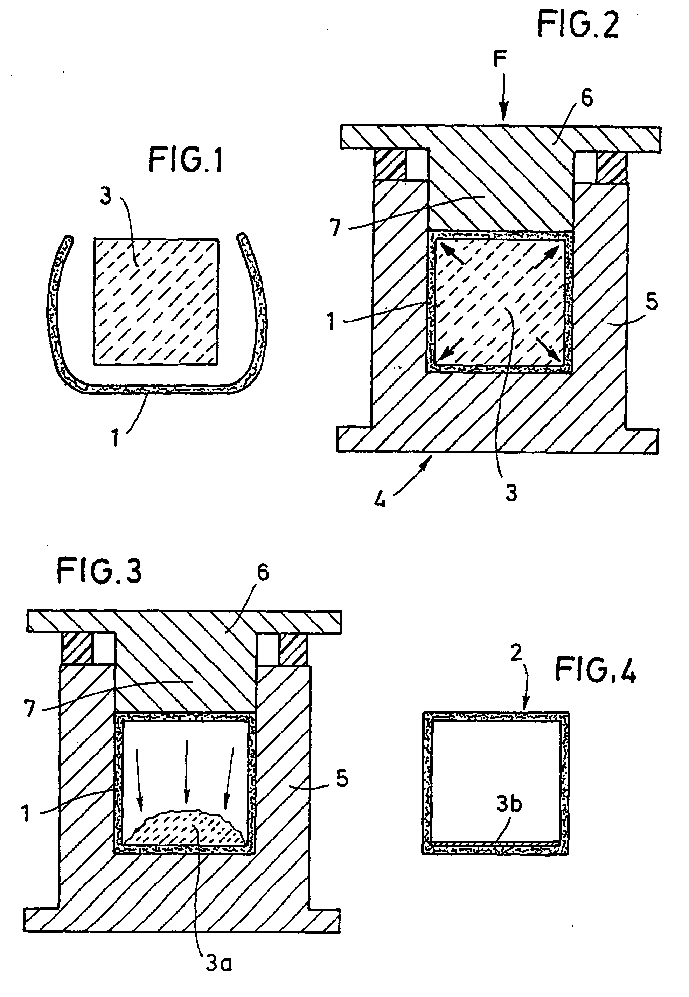

Das in Fig. 1 dargestellte Fasermaterial 1, aus dem der Hohlkörper 2 geformt wird, besteht aus Glasfasern, Kohlefasern o.dgl., die mit Kunstharz getränkt sind, wie beispielsweise einem SMC (Sheet Moulding Compound). Das Fasermaterial 1 kann in einzelnen Matten oder in aufgewickelter Form vorliegen. Ein Kernkörper 3 weist ungefähr die gleiche Form auf wie der herzustellende Hohlkörper 2 und besteht hier aus Schaumstoff. Es wird ein geschlossenzelliger Schaumstoff verwendet, der hermetisch abgeschlossene Gaseinschlüsse aufweist. Der Kernkörper 3 kann auch aus geeigneten Thermoplasten, wie z.B. Polystyrol, bestehen.

Der Kernkörper 3 wird eng mit dem Fasermaterial 1 umwickelt. Durch die Steifigkeit des Schaumstoffes wird das Fasermaterial 1 daran gehindert zusammenzufallen und nimmt etwa die Form des Hohlkörpers 2 an. Dann wird der Kernkörper 3 zusammen mit dem Fasermaterial 1 in ein Formwerkzeug 4 eingelegt. Das Formwerkzeug 4 besteht aus einem Unterteil 5 und einem Oberteil 6. Das Unterteil 5 weist eine Öffnung auf, in die der Kernkörper 3 zusammen mit dem Fasermaterial 1 verbracht wird. Das Oberteil 6 weist einen Stempel 7 auf, der teilweise in die Öffnung des Unterteiles 5 eingreift, so daß das Werkzeugunter- und Oberteil 5,6 in zusammengefügtem Zustand einen geschlossenen Formhohlraum bilden, dessen Innenkontur der Außenkontur des zu formenden Hohlkörpers 2 entspricht.

Das Werkzeugoberteil 6 wird unter leichtem Druck in das Unterteil 5 eingeführt, so daß der Kernkörper 3 verformt wird, wobei das nun komprimierte Gas die vom Werkzeugoberteil 6 erzeugte, auf das Werkzeugunterteil 5 gerichtete Kraft zu allen Seiten hin umlenkt. Dadurch wird das Fasermaterial 1 auch in die Ecken des Formwerkzeuges 4 gepreßt (Fig. 2).

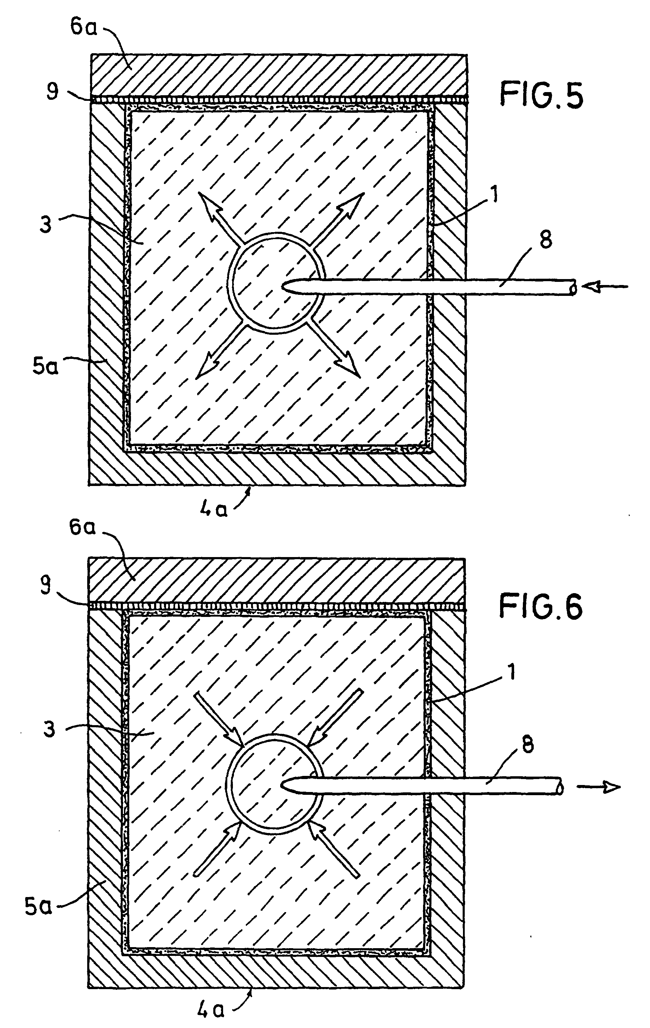

Durch die Temperatur des beheizten Formwerkzeuges 4 (Fig. 3), wird das Harz, welches das Fasermaterial 1 durchsetzt, polymerisiert. Dabei verbinden sich die einzelnen Teile des Fasermaterials 1 zu einer geschlossenen Hülle, die den Kernkörper 3 umgibt. Nach Beginn des Polymerisationsvorganges fällt der Kernkörper 3a aufgrund der Hitze zusammen; bevorzugterweise wird ein Material gewählt, das einen Schmelzpunkt von unter 150 °C hat. Da Schaumstoffkörper zu großen Teilen aus Luft bestehen, verbleibt lediglich ein kleiner Rest von geschmolzenem Kunststoff 3b am Boden des Hohlkörpers 2 (Fig. 4).

Der zum Ausmodellieren des Hohlkörpers 2 benötigte Druck in dem Kernkörper 3 kann anstatt mit einem Preß-Formwerkzeug 4 auch mit einer Lanze 8 erzeugt werden, die Gas von außen in den Kernkörper 3, der in einem Formwerkzeug 4a eingeschlossen ist, einführt (Fig. 5). Das Formwerkzeug 4a besteht aus einem Unterteil 5a, dessen Innenkontur der Form des herzustellenden Hohlkörpers 2 entspricht. Das Werkzeugoberteil 6a kann als ein das Werkzeugunterteil 5a verschließender Deckel ausgeführt sein, wobei zwischen Werkzeugunter- und Oberteil 5a und 6a eine Dichtung 9 vorgesehen ist, die ein Entweichen des Gasdrucks aus dem Formwerkzeug 4a verhindert. Werkzeugunter- und Oberteil 5a und 6a werden geeignet verbunden, um dem in dem Kernkörper 3 erzeugten Gasdruck standzuhalten. Mittels einer durch die Wand z.B. des Werkzeugunterteiles 5a in den Kernkörper 3 eingeführten Lanze 8 wird ein Gasdruck in dem Kernkörper 3 aufgebaut. Dieser Gasdruck formt das Fasermaterial 1 an die Innenkontur des Werkzeuges 4a an. Ist das Harz durch die Erwärmung ausreichend ausgehärtet, kann der Gasdruck wieder abgebaut werden (Fig. 6). Mittels der Lanze 8 wird das Gas aus dem Kernkörper abgesaugt. Wegen der Hitze zerfällt der aus Schaumstoff bestehende Kernkörper 3, so daß nur eine dünne Schicht 3b am Boden des Hohlkörpers 2 verbleibt.

## Patentansprüche

1. Verfahren zur Herstellung eines geschlossenen Hohlkörpers (2) aus einem harzgetränkten Fasermaterial (1), bei welchem ein ein eingeschlossenes Gas enthaltender elastischer Kernkörper (3) mit dem Fasermaterial (1) umhüllt wird, der Kernkörper (3) mit dem Fasermaterial (1) in ein Formwerkzeug (4; 4a) eingelegt wird, der Kernkörper (3) das Fasermaterial (1) an die Innenkontur des Formwerkzeuges (4; 4a) presst und das Formwerkzeug (4; 4a) erhitzt ist, so dass das Harz polymerisiert, wobei der Kemkörper (3) nach dem Aushärten zusammenschmilzt.

2. Verfahren nach Anspruch 1, **dadurch gekennzeichnet, dass** vor der Verfestigung des Harzes in dem Kernkörper (3) ein Gasdruck aufgebaut wird, der das Fasermaterial (1) an die Innenkontur des Formwerkzeuges (4; 4a) presst.

3. Verfahren nach Anspruch 1 oder 2, **dadurch gekennzeichnet, dass** der Kemkörper (3) aus geschlossenzelligem Schaumstoff besteht, der durch die Hitze des Polymerisationsvorganges zusammenschmilzt.

4. Verfahren nach einem der Ansprüche 1 bis 3, **dadurch gekennzeichnet, dass** der Kernkörper (3) aus Polystyrol besteht.

5. Verfahren nach einem der Ansprüche 1 bis 4, **dadurch gekennzeichnet, dass** der Schmelzpunkt des Materials, aus dem der Kernkörper (3) besteht, unter 150 °C liegt.

## Claims

1. Method for producing a closed hollow body (2) from a resin-impregnated fibrous material (1), wherein an elastic core body (3) which contains an enclosed gas is enveloped in the fibrous material (1), the core body (3) with the fibrous material (1) is inserted into a shaping tool (4; 4a), the core body (3) presses the fibrous material (1) onto the inner contour of the shaping tool (4; 4a), and the shaping tool (4; 4a) is heated so that the resin polymerizes, with the core body (3) fusing after curing has taken place.

2. Method according to claim 1, **characterized in that** prior to solidification of the resin, a gas pressure is built up in the core body (3) that presses the fibrous material (1) onto the inner contour of the shaping tool (4; 4a).

3. Method according to claim 1 or 2, **characterized in that** the core body (3) consists of closed-cell foam material which fuses as a result of the heat of the polymerization process.

4. Method according to one of claims 1 to 3, **characterized in that** the core body (3) consists of polystyrene.

5. Method according to one of claims 1 to 4, **characterized in that** the melting point of the material, from which the core body (3) is made, lies below 150°C.

## Revendications

1. Procédé de fabrication d'un corps creux (2) à partir d'un matériau fibreux (1) imprégné de résine, selon lequel on enveloppe avec le matériau fibreux (1), un corps formant noyau (3) élastique, renfermant un gaz, on place le corps formant noyau (3) avec le matériau fibreux (1) dans un outil de moulage (4, 4a), le corps formant noyau (3) presse le matériau fibreux (1) contre l'outil de moulage (4 ; 4a), puis on chauffe l'outil de moulage (4, ;4a) afin de polymériser la résine, le corps formant noyau (3) fondant après la polymérisation.

2. Procédé selon le revendication 1, **caractérisé en ce qu'**avant le durcissement de la résine, on applique, dans le corps formant noyau (3), une pression de gaz, qui presse le matériau fibreux (1) contre le contour intérieur de l'outil de moulage (4 ; 4a).

3. Procédé selon le revendication 1 ou 2, **caractérisé en ce que** le corps formant noyau (3) est en un matériau expansé à pores fermés.

4. Procédé selon une des revendications 1 à 3, **caractérisé en ce que** le corps formant noyau (3) est en polystyrène.

5. Procédé selon une des revendications 1 à 4, **caractérisé en ce que** le point de fusion du matériau dont est constitué le corps formant noyau (3) est inférieur à 150 °C.
